Europäisches Patentamt

European Patent Office

Office européen des brevets

(19)

(11) **EP 0 712 004 B1**

(12) **FASCICULE DE BREVET EUROPEEN**

(45) Date de publication et mention
de la délivrance du brevet:
**19.07.2000   Bulletin 2000/29**

(51) Int Cl.⁷: **G01P 15/08**, G02B 26/02

(21) Numéro de dépôt: **95402488.1**

(22) Date de dépôt: **07.11.1995**

(54) **Appareil comportant un dispositif de compensation des déformations d'une partie d'un système optomécanique ou micromécanique**

Vorrichtung mit einem System zur Kompensierung der Verformung eines Abschnittes eines optomechanischen oder mikromechanischen Systems

Apparatus comprising a device for compensating deformation in an element of an optomechanical or micromechanical system

(84) Etats contractants désignés:
**DE GB IT**

(30) Priorité:  **10.11.1994  FR 9413559**

(43) Date de publication de la demande:
**15.05.1996   Bulletin 1996/20**

(73) Titulaire: **COMMISSARIAT A L'ENERGIE ATOMIQUE**
**75015 Paris (FR)**

(72) Inventeurs:
• **Labeye, Pierre**
  **F-38000 Grenoble (FR)**
• **Ollier, Eric**
  **F-38000 Grenoble (FR)**

(74) Mandataire: **Dubois-Chabert, Guy et al**
**BREVATOME**
**3, rue du Docteur Lanceraux**
**75008 Paris (FR)**

(56) Documents cités:
**EP-A- 0 451 018**          **WO-A-92/14160**
**DE-A- 3 140 584**

• **IEEE TRANSACTIONS ON ELECTRON DEVICES, vol. ed-25, no. 10, Octobre 1978 pages 1241-1249, K.E. PETERSEN 'Dynamic Micromechanics on Silicon: Techniques and Devices'**

# EP 0 712 004 B1

**Description**

Domaine technique auquel se rapporte l'invention

L'invention concerne les techniques de compensation de déformations parasites, suivant certaines directions, de parties mobiles d'appareils de mesure, tels que des capteurs de vibration (par exemple, microphone) ou des accéléromètres, ou d'appareils tels que les commutateurs électro-optiques utilisés dans les réseaux de télécommunication.

Ces techniques concernent essentiellement des microstructures. L'invention trouve donc essentiellement application dans les domaines de la micromécanique ou de l'optomécanique utilisant par exemple de l'optique intégrée.

Etat de la technique

Différentes techniques ont été proposées afin de résoudre, soit dans le domaine de l'optomécanique, soit dans le domaine de la micromécanique, les problèmes de déformation parasite, suivant une certaine direction, de certaines parties mobiles des appareils, la mobilité de ces parties ayant lieu suivant une ou des directions différentes de la direction suivant laquelle s'exerce la déformation.

Une solution différente pour ne pas avoir de déformation parasite consiste à autoriser le mouvement d'une partie mobile, uniquement dans la direction souhaitée. La demande de brevet WO-A-92/14160 pour un accéléromètre prévoit une masse accélérométrique mobile 40, rendue mobile en rotation autour d'un axe 47 contenu dans le plan d'un cadre fixe 42. Afin d'amortir les mouvements parasites et de n'autoriser le mouvement que dans le sens souhaité, une extrémité opposée à l'axe charnière de la masse mobile 40 est raccordée au cadre fixe par une entretoise en L 58, 52. La partie courte 58 du L est raccordée à l'extrémité mobile. La partie longue 52 du L est parallèle à la direction de l'axe de rotation et est raccordée à l'une de ses extrémités à la partie courte du L et à l'autre extrémité à un bord du cadre fixe 42, perpendiculaire à l'axe de rotation 47.

Une telle structure ne pourrait être employée dans un dispositif optomécanique dans lequel la masse mobile comporte un guide de lumière car la partie longue 52 du L empêcherait la continuité du raccordement lumineux entre la partie mobile 40 et le cadre fixe 42.

Généralement un système d'optomécanique utilisant de l'optique intégrée nécessite le dépôt de couches minces sur un substrat. De par les techniques et les matériaux utilisés, les couches ainsi réalisées présentent une inhomogénéité de contrainte dans leur épaisseur. Il s'ensuit une déformation parasite du système, dans la direction perpendiculaire au plan du substrat, lorsque l'on libère la structure du substrat. En général, l'optique intégrée ne peut se permettre de telles déformations, qui peuvent conduire à désaxer ou à décaler des structures de guide optique l'une par rapport à l'autre. En effet, dans de telles structures, des décalages de l'ordre du micron entraînent déjà des pertes optiques importantes.

Jusqu'à présent, pour éviter ces problèmes de déformation, on a employé, dans le domaine de l'optomécanique, les techniques suivantes :

- ou bien on évite à tout prix de dégager des structures susceptibles de désaxer deux guides optiques l'un par rapport à l'autre,
- ou bien on réalise des structures dont la déformation recherchée est commandée dans la direction perpendiculaire au substrat, ce qui permet par là même de rattraper la déformation parasite due aux contraintes.

Mais ces deux démarches limitent de façon considérable les structures envisageables et donc, notamment, les applications de l'optomécanique.

Dans le domaine de la micromécanique, les matériaux utilisés sont en majorité le silicium sous ses différentes formes, et plus ponctuellement la silice, le quartz, l'AsGa ou les polymères. Ces matériaux sont traités par des technologies qu'on peut classifier en deux groupes :

- un premier groupe dans lequel la structure est réalisée dans le substrat lui-même, à l'aide de la technique dite de gravure humide, en profitant des directions préférentielles de gravure des cristaux,
- des techniques où la structure est réalisée dans les couches minces déposées auparavant sur un substrat, et ceci à l'aide des techniques de gravures sèche et humide. La structure est ensuite dégagée en gravant de manière isotrope une couche sacrificielle placée au-dessous.

Dans la quasi-totalité de ces structures, excepté celles réalisées dans des monocristaux, on rencontre des problèmes de déformations parasites dues aux contraintes internes. Ces contraintes sont de deux types :

- contraintes thermiques, dues à la différence de coefficient de dilatation des diverses couches,
- contraintes intrinsèques qui sont directement liées à la structure des matériaux déposés.

Les solutions qui ont été proposées pour résoudre ces problèmes de contraintes dépendent énormément du matériau et des techniques de dépôt. En général, ces solutions essayent de jouer sur les contraintes intrinsèques du matériau. Ainsi, on peut jouer sur :

- la température de dépôt ; il est préférable d'effectuer les dépôts à basse température pour limiter les contraintes,
- le pourcentage d'azote dans le silicium ; selon que l'on s'approche plus de la structure $Si_3N_4$ ou de structure $SiO_2$, on aura des couches en tension ou en compression. Ceci est détaillé dans l'article de C.M. Drum, intitulé : "A low-stress insulating film on silicon by chemical vapor deposition", paru dans Journal of Applied Physics, vol. 39, n°9, pp. 4458-4459, août 1968.
- le dopage ; suivant la nature des atomes placés en substitution, on obtient des contraintes en compression ou en tension. On peut également utiliser une étape de recuit ("annealing" en terminologie anglo-saxonne), qui permet d'atteindre un relâchement des contraintes par chauffage. Ces techniques sont décrites dans "Control of residual stress of polysilicon thin film by heavy doping in surface micromachining", M. ORPANA et al., 1991, International Conference on Solid state sensors and actuators, Digest of Technical Papers, p. 957-960. Ces techniques, tout comme les techniques mentionnées ci-dessus dans le domaine de l'optique intégrée, présentent les inconvénients suivants :
- elles nécessitent une intervention directe sur le matériau et/ou sur la géométrie des composants,
- elles nécessitent une étape technologique supplémentaire, même si ces étapes sont réalisées simultanément à la formation des composants.

En outre, les solutions utilisées en micromécanique sont très difficilement transposables à l'optomécanique.

En effet, dans le domaine de l'optomécanique, on utilise des couches minces déposées sur un substrat. Or, dans la majorité des cas, les techniques de la micromécanique appliquées à ces composants ont pour but de minimiser la contrainte totale (moyenne) dans la couche mince afin de limiter les déformations de l'ensemble substrat-couches minces. Dans le cas où la structure est réalisée dans les couches minces uniquement, l'origine des déformations ne se trouve plus dans la contrainte moyenne de la couche mais dans le gradient de contraintes dans cette même couche. Ce gradient peut être dû :

- à la différence de contraintes entre les diverses couches d'indices optiques différents, nécessaires à la structure optique intégrée (par exemple couche de silice de dopage en phosphore différent),
- à la différence de contraintes intrinsèques ou thermiques, entre le matériau constituant la structure optique (par exemple, la silice), et une éventuelle couche mince déposée au-dessus pour obtenir une fonction particulière (par exemple, de l'aluminium pour réaliser des électrodes),
- au gradient de contraintes qui peut exister dans une même couche, en fonction de la-méthode de dépôt, des impuretés, etc.,
- au fait que les couches utilisées ne sont pas des couches monocristallines ; elles sont déposées sur le substrat par des méthodes diverses (PECVD, LPCVD, APCVD, croissance thermique, pulvérisation, etc.) et ceci entraîne forcément des problèmes de contrainte et donc de déformation parasite.

En outre, on ne peut pas jouer librement sur les épaisseurs des différentes couches optiques en vue d'équilibrer les contraintes, sans risquer de détériorer ou même de détruire le guidage optique.

Par ailleurs, il existe, pour un composant optomécanique, des limitations au niveau du matériau. En effet, la réalisation d'un guidage optique nécessite un contrôle précis des indices optiques des matériaux. Or, tous les paramètres influant sur la structure du matériau influent également sur son indice. Ceci rend donc très délicate l'utilisation des méthodes classiques de micromécanique sur silicium qui traitent, de façon parfois violente, le matériau dans son ensemble (par exemple par recuit thermique, par dopage, etc.).

De plus, l'ajout de couches supplémentaires en vue d'équilibrer les contraintes entraîne également des risques importants au niveau du guidage optique, toujours à cause des problèmes d'indice.

Exposé de l'invention

La présente invention cherche à résoudre ces problèmes. Plus particulièrement, elle propose une solution permettant d'éviter tout traitement des substrats ou des couches des composants rencontrés dans le domaine de la micromécanique ou dans le domaine de l'optomécanique.

De façon plus précise, la présente invention a pour objet un appareil selon la revendication 1.

Le dispositif de compensation selon l'invention est entièrement mécanique et évite tout traitement de la structure ou de la partie mobile dont on veut compenser la déformation, en particulier tout traitement thermique ou tout traitement chimique. Dans le cas où l'appareil présente des structures optiques guidantes, on n'a pas non plus à toucher à la géométrie de ces structures. En outre, on évite toute étape technologique supplémentaire, par rapport à celles relatives à la préparation des couches. Par exemple, si la partie mobile est gravée, la structure compensatrice est gravée en même temps que la structure principale, c'est-à-dire en même temps que la partie mobile. En outre, la technique de gravure -est une technique de mise en oeuvre plus simple que les autres solutions qui cherchent à réaliser un équilibre des contraintes, par exemple par dopage ou par recuit.

Avantageusement, le ou les bras de compensation sont reliés à la partie fixe située latéralement à la partie mobile ou à la partie fixe en regard de l'extrémité libre de ladite partie mobile.

La partie mobile peut comporter plusieurs poutres reliées entre elles.

La présente invention concerne également un procédé tel que stipulé dans la revendication 15.

D'autres aspects de l'invention apparaissent dans les revendications dépendantes.

Brève description des figures

Les caractéristiques et avantages de l'invention apparaîtront mieux à la lumière de la description qui va suivre. Cette description porte sur les exemples de réalisation, donnés à titre explicatif et non limitatif, en se référant à des dessins annexés sur lesquels :

- la figure 1 représente un commutateur optomécanique selon l'art antérieur, sans système de compensation,
- les figures 2a et 2b représentent des étapes de réalisation d'un commutateur optomécanique selon l'art antérieur, avant (figure 2a) et après (figure 2b) gravure du substrat,
- la figure 3a représente un commutateur optomécanique avec un système de compensation selon l'invention,
- la figure 3b représente de façon plus détaillée un bras de compensation,
- la figure 4 représente un commutateur optomécanique avec un dispositif de compensation selon une variante de l'invention,
- les figures 5a et 5b illustrent des étapes d'un procédé de dimensionnement d'un dispositif de compensation selon la présente invention,
- la figure 6 illustre un accéléromètre avec un dispositif de compensation selon l'invention.

Description détaillée de modes de réalisation de l'invention

L'invention va d'abord être décrite dans le cas de l'application à un commutateur optomécanique.

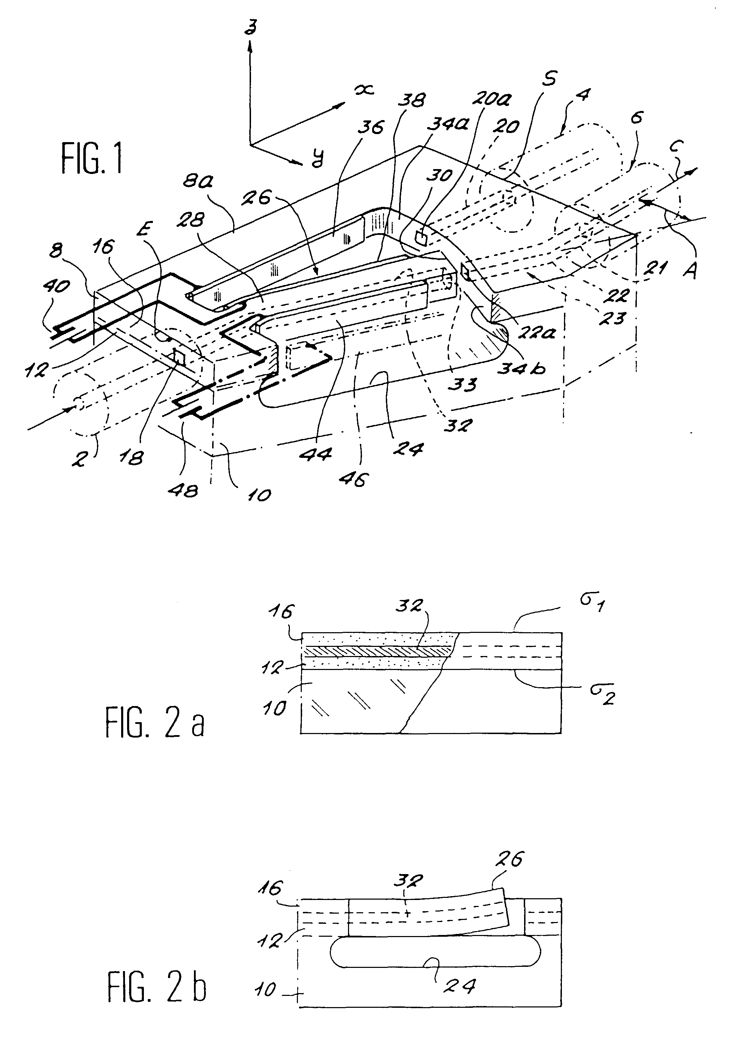

Un tel commutateur et son procédé de fabrication sont décrits dans le brevet français FR-A-2 660 444 (brevet américain correspondant : US-A-5 078 514). La structure du commutateur décrit dans ce brevet va être brièvement rappelée, en liaison avec la figure 1.

Le commutateur comprend une couche plane, ou structure guide 8 (qui peut être composée d'une ou plusieurs couches), qui est réalisée sur un substrat 10 par exemple en silicium monocristallin, et qui présente une face d'entrée E et une face de sortie S rigoureusement parallèles, obtenues par exemple par clivage. La structure guide 8 comporte par exemple une couche tampon 12 en oxyde de silicium (8 à 12 $\mu$m d'épaisseur), et une couche supérieure 16 en silice (2 à 10 $\mu$m d'épaisseur), cette dernière pouvant, pour certaines applications être remplacée par de l'air. La structure guide comprend également un microguide d'entrée 18 et deux microguides de sortie 20 et 22, en oxyde de silicium dopé par exemple par du phosphore, de 2 à 6 $\mu$m de hauteur et de 2 à 8 $\mu$m de large. Les microguides 18 et 20 sont parallèles à une direction x elle-même parallèle à la plus grande surface 8a de la couche plane ou structure guide 8, et ils sont disposés dans le prolongement l'un de l'autre et de part et d'autre d'un évidement 24 traversant la structure guide 8. Un autre microguide de sortie 22 est situé du même côté de l'évidement 24 que le microguide 20 et est adjacent à ce dernier. Il comporte, du côté de la sortie S du commutateur, une partie 21, strictement parallèle au microguide 20 et, du côté de l'évidement 24, une partie 23 formant un angle rentrant A avec la partie 21, d'une valeur comprise entre 0,06° et 6° environ, cette valeur étant liée à la longueur de la poutre.

On a donné ci-dessus un exemple de réalisation particulier de structure guidante mais l'invention peut s'appliquer à d'autres types de structures telles que par exemple celles obtenues par échange d'ions dans des substrats de type verre, niobate de lithium ou par dépôts ou gravures de couches du type silice, $Si_3N_4$, $SiO_XN_y$, AsGa, InP, etc..., le confinement latéral dans le microguide n'étant pas forcément obtenu par gravure de la couche formant le microguide.

L'évidement 24 définit, dans la structure 8 fixe, une poutre flexible 26 orientée au repos parallèlement à la direction x, cette poutre pouvant se déformer dans l'évidement 24 selon une direction y, parallèle à la surface 8a de la structure guide (qui, elle, définit une partie fixe) et perpendiculaire à la direction x. Cette poutre 26 comprend une extrémité fixe 28, solidaire de la structure guide 8, et une extrémité libre 30 apte à se déplacer dans l'évidement 24.

Dans le prolongement du microguide 18 d'entrée, un microguide central 32 s'étend sur toute la longueur de la poutre 26, son extrémité 33 débouchant à l'extrémité 30 de celle-ci.

La commutation du faisceau incident véhiculé par le microguide d'entrée vers le microguide de sortie 20 est assurée en amenant l'extrémité libre 33 du microguide central de la poutre en face et en coïncidence avec l'extrémité d'entrée 20a du microguide de sortie 20. La commutation vers le microguide de sortie 22 se fait en amenant l'extrémité libre 33 du microguide central en face et en coïncidence avec l'extrémité d'entrée 22a du microguide de sortie 22. La paroi interne de l'évidement 24, en regard de l'extrémité libre 30 de la poutre, est constituée de deux parties 34a et 34b formant un angle rentrant de valeur proche ou identique à l'angle A. Les déformations de la poutre pour amener celle-ci en coïncidence avec l'un ou l'autre des microguides de sortie, sont assurées, dans le mode de réalisation représenté sur la figure 1, à l'aide de condensateurs de capacité variable. A cet effet, les surfaces latérales de l'évidement 24, au niveau de la structure guide 8, orientées selon la direction x, sont équipées de métallisations respectivement 36 et 46. Par ailleurs, les faces latérales de la poutre 26 en regard, orientées selon la direction x lorsque celle-ci est au repos, sont équipées de métallisations respectivement notées 38 et 44. Les métallisations 36 et 38 sont reliées à une source d'alimentation électrique 40, les métallisations 44 et 46 sont reliées à une source d'alimentation électrique 48. L'application d'une tension convenable aux bornes de la paire de condensateurs ainsi formée crée une force capacitive parallèle à la direction y et qui entraîne une déformation de la poutre 26 selon cette direction y. Cette force $F_c$ permet un déplacement latéral $y_c$ de l'extrémité libre de la poutre 26, selon y, qui est donné par l'équation :

$$y_c = 3/2 \cdot F_c \cdot h^{-1} \cdot \left(\frac{L}{l}\right)^3 \cdot E^{-1}$$

où E est le module d'Young, l la largeur de la poutre selon la direction y, L la longueur de la poutre selon la direction x et h l'épaisseur de la poutre selon la direction z.

Le procédé de fabrication de cette structure est détaillé dans le brevet mentionné ci-dessus en référence. Ce procédé fait intervenir :

- une étape de formation de la couche 12, par exemple par oxydation thermique du substrat 10,
- le dépôt d'une couche de silice par LPCVD ou par PECVD,
- une étape de gravure réalisée à travers un masque défini par photolithographie pour obtenir le microguide 32,
- une étape de dépôt de la couche 16 par technique de dépôt chimique en phase vapeur basse pression (LPCVD), ou assisté plasma (PECVD),
- des étapes de gravure anisotrope et isotrope du type gravure ionique réactive avec, soit du $CHF_3$, soit du $SF_6$ ; ces dernières étapes de gravure permettent de dégager la poutre 26 de son substrat.

L'étape de réalisation de la poutre en silice, par dépôt PECVD, avec différents dopages en phosphore, conduit à un gradient de contraintes selon la direction verticale y, qui est à l'origine d'une déformation du système. Ceci est illustré sur la figure 2a, où les références numériques identiques à celles de la figure 1 y désignent les mêmes éléments. Cette figure représente la structure obtenue avant l'étape de dégagement de la poutre. Sur cette figure 2a, $\sigma_2$ désigne la contrainte à l'interface substrat 10-couche mince (12, 32, 16) et $\sigma_1$ désigne la contrainte à la surface de la couche mince. Du fait des différences de nature entre les sous-couches 12, 32 et 16, ainsi que des différences de dopage en phosphore dans la couche, il apparaît un gradient de contraintes dans la couche mince : la contrainte $\sigma_2$ est inférieure à la contrainte $\sigma_1$. Ceci conduit, lorsque l'on dégage la poutre 26, c'est-à-dire lorsque l'on creuse la cavité 24 sous la poutre 26, à une déviation verticale de cette poutre qui désaxe complètement les guides optiques d'entrée et de sortie, ce qui rend le commutateur optique parfaitement inopérant, comme illustré sur la figure 2b.

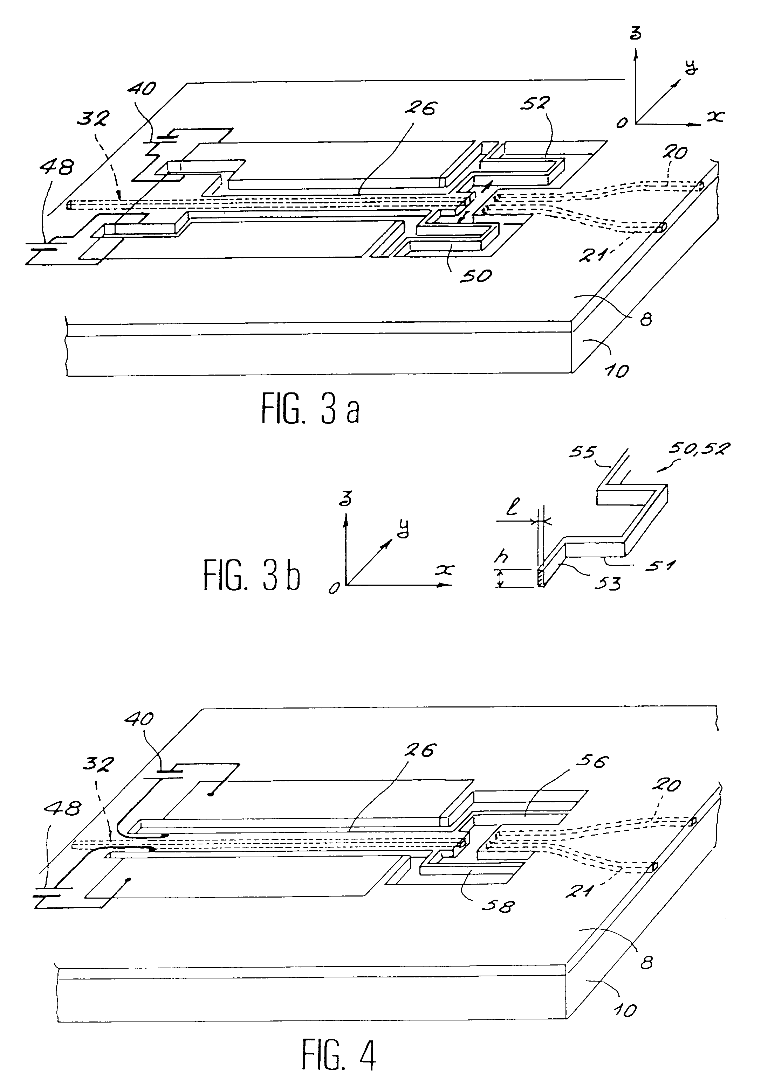

Dans le cas du commutateur optique, une première solution au problème, rentrant dans le cadre de la présente invention, est illustrée sur la figure 3a. Des références identiques à celles de la figure 1 y représentent les mêmes éléments. L'ensemble est représenté de manière plus schématique que sur la figure 1.

Le système de compensation est constitué de deux bras 50, 52 qui relient l'extrémité libre de la poutre 26 au reste de la structure 8, qui est une partie fixe, puisque reliée au substrat 10 de silicium. Comme on le voit plus en détail sur la figure 3b, chaque bras 50, 52 peut être constitué d'un corps 51 en "U", une branche 53, 55 étant rajoutée à l'extrémité libre et de manière sensiblement perpendiculaire à chaque branche latérale du "U". L'extrémité libre d'une de ces branches 53, 55 est reliée à la poutre 26, l'extrémité libre de l'autre branche est reliée au reste de la structure guide 8. Il en va de même pour le deuxième bras compensateur.

La géométrie des bras compensateurs peut être envisagée de diverses façons. Néanmoins, les bras doivent être rigides dans le sens vertical (direction z) et souples dans le sens horizontal (plan xy). On peut jouer sur la géométrie des bras en augmentant le facteur de forme hauteur/largeur, la hauteur h et la largeur 1 étant identifiées sur la figure 3b comme étant la hauteur de la section du bras compensateur dans une coupe verticale (suivant un plan parallèle à zx), et la largeur 1 étant la largeur du bras compensateur dans la même coupe verticale. En jouant sur ce facteur de forme, on peut obtenir une souplesse suffisante, dans le plan xy, pour ne pas entraver les déplacements de la poutre dans ce même plan et une rigidité suffisante, suivant la direction z, pour limiter les déformations de la poutre suivant cette même direction.

Selon un autre mode de réalisation, les bras sont droits ou de forme droite

Un autre mode de réalisation des bras compensateurs, dans le cas d'un commutateur optomécanique, est illustré sur la figure 4. Sur cette figure, on voit encore deux bras compensateurs 56, 58, mais chaque bras est approximativement en forme d'équerre avec deux segments sensiblement perpendiculaires l'un à l'autre. Là encore, on jouera sur le rapport de forme hauteur/largeur de la section de chaque bras, de façon à lui donner la rigidité désirée dans le sens vertical et la souplesse souhaitée dans le plan horizontal.

Le système peut aussi fonctionner avec un seul bras compensateur. Néanmoins, un mode préféré de réalisation est celui où le système est symétrique dans le plan horizontal (comme sur les figures 3a et 4, par rapport à un plan médian parallèle à zOx). D'une façon plus générale, si la partie mobile dont on veut corriger les déformations présente une certaine symétrie spatiale, il est souhaitable que le système de compensation présente la même symétrie. Cette géométrie permet d'éviter les petites déformations latérales qui pourraient apparaître par flambage des bras, du fait que la silice, ou le matériau constitutif de la partie mobile, se trouve globalement en compression.

La méthode suivante permet de modéliser et de simuler l'influence de l'inhomogénéité des contraintes dans la structure principale, ou partie mobile, dont on veut compenser la déformation, et d'en déduire un dimensionnement plus précis des bras compensateurs, de façon à ce que la déformation ne dépasse pas une valeur critique. La méthode est la suivante :

- On prévoit ou on observe une déformation parasite D de la partie mobile, par exemple due à une répartition inhomogène des contraintes dans cette partie mobile. On mesure cette déformation au point critique de la structure.
- On calcule alors quelle sollicitation mécanique équivalente simple P (force, moment) provoquerait la même déformation D au point critique, sans système de compensation.
- On applique théoriquement cette sollicitation P à la structure complète, c'est-à-dire à la structure précédente à laquelle on a rajouté la structure de compensation.
- On analyse alors la façon de dimensionner cette structure de compensation pour que la déformation parasite du système complet au point critique soit inférieure à une valeur limite souhaitée $D_C$. (On entend par point critique, le centre de la poutre à l'extrémité libre de la poutre).

On peut modéliser de manière analytique le système, en utilisant la théorie mécanique des poutres. Ainsi, dans un premier temps, avant les étapes décrites ci-dessus, on peut ramener la partie mobile en question à une poutre équivalente, ayant la même longueur, le même moment d'inertie et le même module d'Young que ladite partie mobile. La modélisation qui suit est valable pour des poutres de géométries différentes, les différences de géométrie se retrouvant dans le calcul des moments d'inertie de ces poutres.

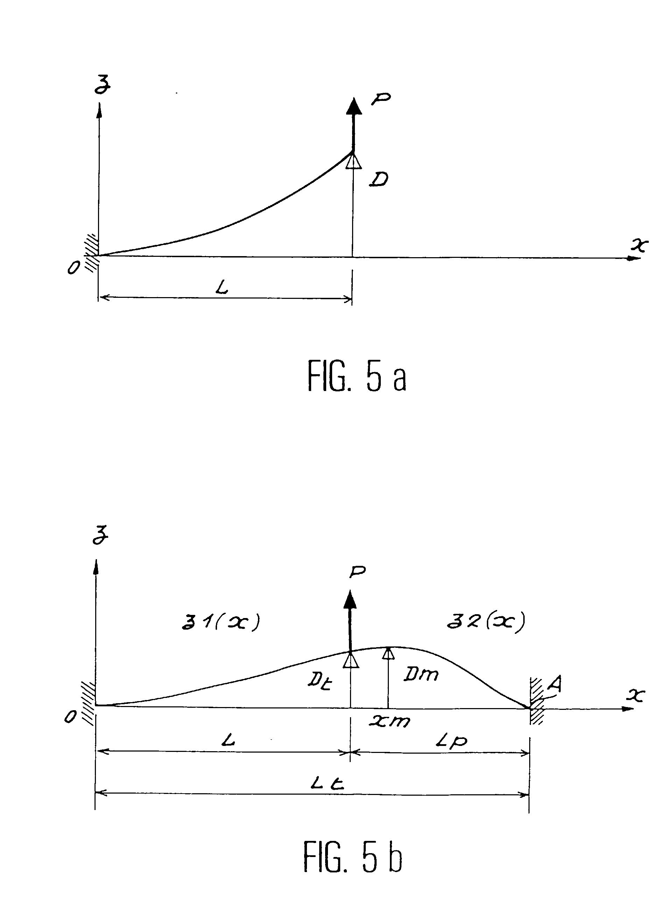

Afin de préciser les notations, on se reportera aux figures 5a et 5b. La figure 5a représente la déviation D d'une poutre simple de longueur L, de rigidité $E_1 x I_1$, sous l'action d'une force ponctuelle P appliquée à son extrémité libre. La figure 5b représente la même poutre de longueur L avec son système de compensation. Ce dernier est ramené au modèle d'une poutre de longueur $L_p$, dont une des extrémités est encastrée dans un support fixe, en un point A, alors que l'autre extrémité, libre, est reliée à l'extrémité libre de la poutre de longueur L. Cette dernière est encastrée dans un support fixe en un point O, qu'on prend également comme origine d'un repère Oxz. L'ensemble des deux poutres a une longueur $L_t = L + L_p$. Le système de compensation a une rigidité $E_2 x I_2$. De plus, on adopte les notations suivantes :

- $E_1$ représente le module d'Young de la poutre principale,
- $I_1$ est le moment d'inertie de la poutre principale,
- $E_2$ représente le module d'Young de la poutre de compensation,
- $I_2$ est le moment d'inertie du système de compensation,
- $D_t$ est la déviation du point critique à l'extrémité de la poutre principale avec système de compensation,
- $D_m$ est la déviation maximale du système complet (poutre principale + poutre de compensation),
- $x_m$ représente la position longitudinale du point de déviation maximale du système complet.

On observe d'abord une déviation D, suivant la direction z, de la poutre principale, sans système de compensation. La force nécessaire pour obtenir cette déviation D de la poutre, sans système de compensation, est donnée par :

$$P = \frac{3 \cdot E_1 \cdot I_1}{L^3} \cdot D$$

On applique ensuite cette force P au système complet, c'est-à-dire poutre principale + poutre de compensation, le point d'application de P étant toujours situé à l'extrémité de la poutre principale au niveau du point critique. On parvient alors, en utilisant la théorie des poutres dans le domaine de la résistance des matériaux, à déterminer la déformée du système, de part et d'autre du point d'application, c'est-à-dire, pour chaque point d'abscisse x, le long de la poutre principale ou de la poutre de compensation, l'amplitude de la déviation étant respectivement $z_1(x)$ ou $z_2(x)$

Le système étudié est décrit sur la figure 5b. De par la nature des appuis (2 encastrements), la structure étudiée constitue un système hyperstatique, c'est-à-dire que les équations de la statique ne suffisent plus à déterminer toutes les réactions d'appui. Il devient donc nécessaire d'établir des relations supplémentaires fondées sur la considération de la déformée du système.

Ces conditions supplémentaires résident dans le fait que la déformée du système doit présenter une tangente horizontale aux 2 points d'encastrement.

En utilisant des hypothèses classiques de la mécanique des poutres (Loi de Hooke, faibles déformations, flexion pure) ainsi que le théorème de superposition, on parvient à déterminer la déformée du système complet (poutre principale et système de compensation).

On obtient alors la déformée du système pour $0 < X < L$ :

$$z_1(x) = \frac{1}{E_1 \cdot I_1} \cdot \left( -\frac{P \cdot L_p}{6 \cdot L_t} \cdot x^3 + C_1 \cdot x \right) + \frac{1}{E_1 \cdot I_1} \cdot \left( \frac{M_a}{6 \cdot L_t} \cdot (L_t - x)^3 + \dot{C}'_1 \cdot x + C'_2 \right)$$
$$+ \frac{1}{E_1 \cdot I_1} \cdot \left( -\frac{M_b}{6 \cdot L_t} \cdot x^3 + C''_1 \cdot x \right)$$

Pour $L < x < L_t$ :

$$z_2(x) = \frac{1}{E_2 I_2} \cdot \left( -\frac{P \cdot L_p}{6 \cdot L_t} \cdot x^3 + \frac{P}{6} \cdot (x - L)^3 + D_1 \cdot x + D_2 \right)$$
$$+ \frac{1}{E_2 \cdot I_2} \left( \frac{M_a}{6 \cdot L_{t^-}} \cdot (L_t - x)^3 + D'_1 \cdot x + D'_2 \right) + \frac{1}{E_2 \cdot I_2} \left( -\frac{M_b}{6 \cdot L_t} \cdot x^3 + D''_1 \cdot x + D''_2 \right)$$

avec :

$$C_1 = \frac{P \cdot L_p \cdot L^2}{6 \cdot L_t^2} \left( 1 - \frac{E_1 \cdot I_1}{E_2 \cdot I_2} \right) \cdot (L_t + 2 \cdot L_p) + \frac{E_1 \cdot I_1}{E_2 \cdot I_2} \cdot \frac{P \cdot L_p}{6 \cdot L_t} \cdot (L_t^2 - L_p^2)$$

$$D1 = \frac{P \cdot L_p}{6 \cdot L_t} \cdot (L_t^2 - L_p^2) + \frac{P \cdot L_p \cdot L^3}{3 \cdot L_t^2} \cdot \left( 1 - \frac{E_2 \cdot I_2}{E_1 \cdot I_1} \right)$$

$$D2 = \frac{P \cdot L_p \cdot L^3}{3 \cdot L_t} \cdot \left( 1 - \frac{E_2 \cdot I_2}{E_1 \cdot I_1} \right)$$

$$C'_1 = \frac{M_a \cdot L_p^3}{3 \cdot L_t^2} \cdot \left(1 - \frac{E_1 \cdot I_1}{E_2 \cdot I_2}\right) + \frac{M_a \cdot L_t}{6}$$

$$C'_2 = - \frac{M_a \cdot L_t^2}{6}$$

$$D'_1 = \frac{M_a \cdot Lp^2}{6 \cdot L_t^2} \cdot \left(1 - \frac{E_2 \cdot I_2}{E_1 \cdot I_1}\right) \cdot (L_t + 2 \cdot L) + \frac{E_2 \cdot I_2}{E_1 \cdot I_1} \cdot \frac{M_a \cdot L_t}{6}$$

$$D'_2 = - \frac{M_a \cdot Lp^2}{6 \cdot L_t} \cdot \left(1 - \frac{E_2 \cdot I_2}{E_1 \cdot I_1}\right) \cdot (L_t + 2 \cdot L) - \frac{E_2 \cdot I_2}{E_1 \cdot I_1} \cdot \frac{M_a \cdot L_t^2}{6}$$

$$C''_1 = \frac{M_b \cdot L^2}{6 \cdot L_t^2} \cdot \left(1 - \frac{E_1 \cdot I_1}{E_2 \cdot I_2}\right) \cdot (L_t + 2 \cdot L_p) + \frac{E_1 \cdot I1}{E_2 \cdot I_2} \cdot \frac{M_b \cdot L_t}{6}$$

$$D''_1 = \frac{M_b \cdot L^3}{3 \cdot L_t^2} \cdot \left(1 - \frac{E_2 \cdot I_2}{E_1 \cdot I_1}\right) + \frac{M_b \cdot L_t}{6}$$

$$D''_2 = - \frac{M_B \cdot L^3}{3 \cdot L_t} \cdot \left(1 - \frac{E_2 \cdot I_2}{E_1 \cdot I_1}\right)$$

$M_a$ et $M_b$ sont les moments de réaction de la poutre au niveau des deux encastrements. On impose deux conditions supplémentaires : la déformée du système complet doit présenter des tangentes horizontales aux niveaux des encastrements A et O.

On arrive alors au système suivant, dont les solutions sont les moments Ma et Mb, déterminés en fonction des caractéristiques des matériaux et des dimensions géométriques du système étudié.

$$\alpha_1.M_a + \beta_1.M_b = \gamma_1$$

$$\alpha_2.M_a + \beta_2.M_b = \gamma_2$$

d'où les solutions :

$$M_a = \frac{\beta_2 \cdot \gamma_1 - \beta_1 \cdot \gamma_2}{\alpha_1 \cdot \beta_2 - \alpha_2 \cdot \beta_1}$$

$$M_b = \frac{\alpha_2 \cdot \gamma_1 - \alpha_1 \cdot \gamma_2}{\alpha_2 \cdot \beta_1 - \alpha_1 \cdot \beta_2}$$

$$\alpha_1 = 2 \cdot \left( L_t - \frac{L_p{}^3}{L_t{}^2} \cdot \left( 1 - \frac{E_1 \cdot I_1}{E_2 \cdot I_2} \right) \right)$$

$$\beta_1 = -\left( \frac{L^2}{L_t{}^2} \left( 1 - \frac{E_1 \cdot I_1}{E_2 \cdot I_2} \right) \cdot \left( L_t + 2 \cdot L_p \right) + \frac{E_1 \cdot I_1}{E_2 \cdot I_2} \cdot L_t \right)$$

$$\alpha_2 = \left( \frac{L^2}{L_t{}^2} \left( 1 - \frac{E_2 \cdot I_2}{E_1 \cdot I_1} \right) \cdot \left( L_t + 2 \cdot L \right) + \frac{E_2 \cdot I_2}{E_1 \cdot I_1} \cdot L_t \right)$$

$$\beta_2 = -2 \cdot \left( L_t - \frac{\cdot L^3}{L_t{}^2} \left( 1 - \frac{E_2 \cdot I_2}{E_1 \cdot I_1} \right) \cdot \right)$$

$$\gamma_1 = \frac{P \cdot L_p \cdot L^2}{L_t{}^2} \cdot \left( 1 - \frac{E_1 \cdot I_1}{E_2 \cdot I_2} \right) \cdot \left( L_t + 2 \cdot L_p \right) + \frac{P \cdot L_p}{L_t} \cdot \frac{E_1 \cdot I_1}{E_2 \cdot I_2} \cdot \left( L_t{}^2 - L_p{}^2 \right)$$

$$\gamma_2 = \frac{P \cdot L \cdot L_p}{L_t} \cdot \left( 2 \cdot L_t - L_p \right) - \frac{2 \cdot P \cdot L^3 \cdot L_p}{L_t{}^2} \cdot \left( 1 - \frac{E_2 \cdot I_2}{E_1 \cdot I_1} \right)$$

La valeur intéressante est la déviation du système au point critique qui ne correspond pas forcément à la déviation maximale du système complet. En l'occurrence, dans notre cas, c'est la déviation de l'extrémité de la poutre principale qui nous importe. celle-ci vaut :

$$D_t = z_1(L) = z_2(L).$$

Il faut alors dimensionner le système de compensation, en choisissant des paramètres ($L_p$, $E_2$, $I_2$) de façon à obtenir une déviation $D_t$ inférieure à la valeur critique $D_c$ qui représente la déviation tolérable que l'on se fixe au départ. (Notamment dans le cas d'un commutateur optomécanique afin de limiter les pertes optiques).

**EP 0 712 004 B1**

L'exemple suivant concerne l'application numérique à un commutateur optomécanique. On rappelle que l'objectif est de rigidifier l'ensemble dans le sens vertical pour aligner les guides optiques, tout en conservant la souplesse dans le sens de la déviation, par exemple, électrostatique ou électromagnétique.

On a choisi, pour l'application numérique, la configuration la plus simple, à savoir celle représentée sur la figure 4, les bras de compensation étant en équerre. Si chaque équerre possède deux segments de bras orthogonaux, un segment de longueur $L_1$ et un segment de longueur $L_2$, chaque bras est assimilé à un bras droit dont la longueur $L_p$ est égale à $L_1+L_2$. Ceci signifie, en outre, qu'on néglige l'influence de la torsion de la poutre de compensation au niveau de l'angle entre les deux segments de bras.

Soient h la hauteur (suivant la direction z) et l la largeur (suivant la direction y) de la poutre principale, et $l_p$ la largeur et $h_p$ la hauteur (toujours suivant la même direction z) de la section de la poutre de compensation.

Le moment d'inertie de la structure principale vaut donc : $I_1 = \frac{(l \times h)^3}{12}$, pour une déviation suivant la direction z.

Le moment d'inertie du système de compensation vaut : $I_2 = \frac{(l_p \times h_p)^3}{6}$, pour une déviation suivant la direction z.

La méthode a été appliquée à un système dont les paramètres ont les valeurs suivantes :

- poutre principale :
  $E_1 = 7 \times 10^{10} \text{N/m}^2$, L = 2000 µm, 1 = 30 µm, h = 25 µm,
- Système de compensation :
  $E_2 = 7 \times 10^{10} \text{N/m}^2$, $l_p$ = 2 µm, $h_p$ = 25 µm, $L_p$= longueur à déterminer.

Suivant la longueur des bras, on rattrape plus ou moins de déviations parasites. Les résultats, pour plusieurs cas, sont rassemblés dans le tableau I ci-dessous. Les valeurs indiquées dans ce tableau sont les déviations au point d'application de la force, c'est-à-dire en bout de poutre principale. Cette valeur ne correspond pas à la déviation maximale de la structure qui, en général, ne se situe pas au point d'application de la force.

## TABLEAU I

| DEVIATION PARASITE D (microns) | DEVIATION AVEC BRAS (microns) $L_p$=1000 microns | DEVIATION AVEC BRAS (microns) $L_p$=500 microns | DEVIATION AVEC BRAS (microns) $L_p$=200 microns |
|---|---|---|---|
| 50 | 6,45 | 1,40 | 0,15 |
| 20 | 2,58 | 0,56 | 0,06 |
| 1 | 0,13 | 0,03 | 0,00 |

D'après les résultats numériques, il est clair que le système de bras compensateur permet de rattraper une partie de la déviation parasite.

Ainsi, par exemple, si l'on désire ramener les 20 µm de déviation des poutres de 2 mm de longueur à une valeur inférieure au micron, très compatible avec l'optique intégrée, il faut ajouter le système de compensation constitué de deux bras de 500 µm de long. Si l'on désire passer à une déviation inférieure à 0,1 µm, on utilisera deux bras de 200 µm de long.

Une fois la longueur nécessaire des bras compensateurs déterminée, la réalisation du système est identique à la réalisation décrite dans le brevet FR-A-2 660 444 (US-A-5 078 514). La réalisation des bras s'effectue en même temps que la réalisation de la poutre principale, par gravure. Seule la géométrie du masque choisi pour réalisé la gravure change.

Dans l'exemple de réalisation précédemment donné, les bras sont donc formés par les couches 12 et 16.

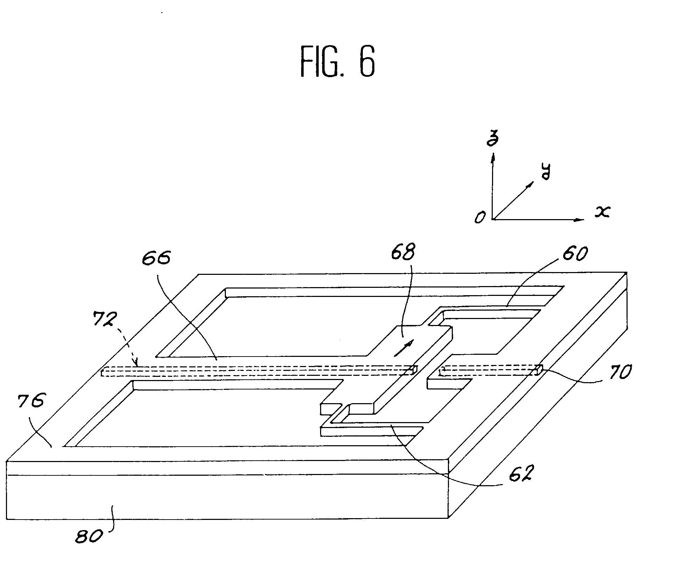

L'exemple qui suit (figure 6) se rapporte au domaine de l'accélérométrie, et plus particulièrement à un accéléromètre optomécanique.

L'accéléromètre est réalisé dans une couche 76 (par exemple en silice) qui repose sur un substrat 80 (par exemple en silicium). Sous l'influence d'une accélération γ, une masse 68 placée à l'extrémité d'une poutre 66 se déplace latéralement, provoquant une déviation d'un guide optique 72 qui passe longitudinalement à travers cette poutre 66. En repos, la sortie de ce guide 72 se trouve en regard de l'entrée d'un guide 70, incorporé dans la partie fixe, à savoir la couche 76. L'accélération provoque un désaxement du guide d'entrée 72 et du guide de sortie 70, suivant la direction y. Un faisceau de lumière d'entrée est véhiculé par le guide 72, et on mesure en sortie du guide

l'intensité transmise. En cas d'accélération latérale (γ) il s'ensuit une modification de l'intensité lumineuse en sortie, qui est directement liée à l'accélération γ. Mais, afin de pouvoir réaliser une mesure correcte, les deux guides doivent être alignés dans la direction z au repos, d'où l'intérêt de bras de compensation mécaniques 60, 62. L'effet technique obtenu par ces deux bras est d'apporter une rigidité suffisante à la masse 68, suivant la direction verticale z, tout en la laissant libre de se déplacer suivant la direction y. Le dimensionnement de ces deux bras peut être réalisé à l'aide de la méthode décrite ci-dessus. On peut également utiliser des bras ayant d'autres formes, par exemple celle de la figure 3b.

D'une façon plus générale, l'invention qui a été décrite permet de contrôler les déformations de structures mécaniques réalisées dans des couches minces présentant un gradient de contraintes. On parvient ainsi à conserver l'alignement des guides optiques sur les puces d'optiques intégrées présentant une structure mécanique. Cette invention s'applique donc à toutes les solutions industrielles nécessitant un système intégré optomécanique, où l'alignement des guides optiques pose problème. On peut donc fabriquer des accéléromètres, des microphones, des capteurs de pression, etc., mais également des dispositifs actifs pour les télécommunications, comme le commutateur optomécanique qui permet de transférer un signal lumineux transporté par une fibre optique vers une quelconque fibre d'un réseau de fibres optiques de sortie.

En outre, les applications ne sont pas limitées aux dispositifs où l'on rencontre des guides optiques, puisque le problème de la déviation d'une structure mobile suivant une direction par rapport à une structure fixe peut se poser aussi bien dans des appareils faisant intervenir, par exemple, des condensateurs à capacités variables, l'une des armatures du condensateur étant reliée à une structure mobile, l'autre armature à une structure fixe.

**Revendications**

1. Appareil de micromécanique ou appareil comportant une structure optique guidante (32, 72), ayant une partie mobile présentant deux extrémités (28, 30), dont l'une, dite extrémité fixe (28), se rattache à une partie fixe (12, 16, 76) de l'appareil, définissant un plan et dont l'autre (30) est dite extrémité libre, cet appareil ayant également un dispositif de compensation des déformations, suivant une première direction (z), perpendiculaire au plan de la partie mobile (26, 68), cette dernière pouvant se déplacer suivant une deuxième direction (y), contenu dans ledit plan différente de la première direction (z), ledit dispositif de compensation comportant au moins un bras (50, 52, ; 56, 58 ; 60, 62) reliant d'une part l'extrémité libre (28) de la partie mobile et d'autre part la partie fixe de l'appareil, ce ou ces bras présentant une souplesse suffisante selon la deuxième direction (y), de manière à ne pas entraver le déplacement de la partie mobile selon cette deuxième direction (y), et une rigidité suffisante suivant la première direction (z), de manière à limiter les déformations de la partie mobile suivant cette première direction.

2. Appareil selon la revendication 1, le ou les bras de compensation étant reliés à la partie fixe située latéralement par rapport à la partie mobile ou à la partie fixe en regard de l'extrémité libre de ladite partie mobile.

3. Appareil selon l'une des revendications précédentes, la partie mobile comportant plusieurs poutres reliées entre elles.

4. Appareil de compensation selon une des revendications 1 à 3, la première (z) et la deuxième (y) directions étant perpendiculaires entre elles.

5. Appareil de compensation selon l'une des revendications 1 à 4, les bras (50, 52 ; 56, 58 ;60, 62) étant au nombre de deux.

6. Appareil de compensation selon la revendication 5, la partie mobile présentant une symétrie par rapport à un plan médian, les deux bras (50, 52 ; 56, 58 ; 60, 62) étant symétriques l'un de l'autre par rapport au même plan médian.

7. Appareil de compensation selon l'une des revendications 1 à 6, le ou les bras (56, 58 ; 60, 62) ayant chacun une forme d'équerre, avec deux segments sensiblement perpendiculaires l'un par rapport à l'autre.

8. Appareil de compensation selon l'une des revendications 1 à 6, le ou les bras (50, 52) comportant chacun un corps (51) en forme de "U", avec une branche (53, 55) rajoutée à l'extrémité libre de manière sensiblement perpendiculaire à chaque branche latérale du "U".

9. Appareil de compensation selon l'une des revendications 1 à 6, le ou les bras étant de forme droite.

**10.** Commutateur optomécanique comportant un dispositif de compensation tel que compris dans l'appareil selon l'une des revendications 1 à 9, la partie mobile comportant une poutre (26) équipée d'un microguide central (32).

**11.** Commutateur optomécanique selon la revendication 10, comportant en outre un substrat (10) supportant une structure guide (12, 16, 32), dans laquelle est définie la poutre (26) qui comporte le microguide (32), un évidement (24) pratiqué dans le substrat, un microguide d'entrée (18) et deux microguides de sortie (20, 22) définis dans la structure guide, les microguides d'entrée et de sortie étant disposés de part et d'autre de l'évidement (24), et des moyens (36, 38, 44, 46, 40, 48) pour commander le déplacement de la poutre (26).

**12.** Accéléromètre optomécanique comportant un dispositif de compensation tel que compris dans l'appareil selon l'une des revendications 1 à 9, la partie mobile étant constituée par une masse (68) placée à l'extrémité d'une ou plusieurs poutres (66).

**13.** Accéléromètre selon la revendication 12, comportant en outre un substrat (80) supportant une couche (76) dans laquelle est définie la masse (68) et la, ou les poutre(s) (66).

**14.** Accéléromètre selon la revendication 13, comportant un guide optique (72) qui passe longitudinalement à travers une poutre (66), au moins un guide optique (70) incorporé dans la couche (76) et situé 5n regard de l'extrémité mobile de la poutre.

**15.** Procédé de détermination du dimensionnement du ou des bras d'un dispositif de compensation tel que compris dans l'appareil selon une des revendications 1 à 9, caractérisé en ce que :

- on détermine, en un point dit point critique, une déformation parasite D de la partie mobile suivant la première direction (z), dans le cas où la partie mobile ne comporte pas de dispositif de compensation,
- on calcule quelle sollicitation mécanique équivalente P provoque la déformation parasite D au point critique,
- on applique la sollicitation P à l'ensemble constitué par la partie mobile et le dispositif de compensation et on en déduit la déformation mécanique $D_t$ de la partie mobile avec le dispositif de compensation,
- on en déduit le dimensionnement du dispositif de compensation pour que la déformation parasite $D_t$ soit inférieure à une valeur limite souhaitée $D_c$.

**16.** Procédé selon la revendication 15, dans lequel, de plus, on modélise la partie mobile sous la forme d'une poutre ayant même longueur, même moment d'inertie et même module d'Young que ladite partie mobile, et dans lequel on modélise les bras compensateurs sous la forme d'une poutre dont certains paramètres sont à déterminer pour obtenir le dimensionnement du ou des bras.

**17.** Procédé selon la revendication 15, dans lequel on détermine la longueur ($L_p$) et/ou le module d'Young ($E_2$) et/ou le moment d'inertie ($I_2$) de la poutre qui modélise les bras compensateurs.

**Claims**

**1.** Micromechanical apparatus or apparatus incorporating a guiding optical structure (32, 72) having a mobile part with two ends (28, 30), whereof one, called the fixed end (28), is attached to a fixed part (12, 16, 76) of the apparatus, defining a plane and whereof the other (30) is called the free end, said apparatus also having a device for compensating deformations, in accordance with a first direction (z), perpendicular to the plane of the mobile part (26, 68), the latter being able to move in a second direction (y), contained in said plane differing from the first direction (z), said compensating device incorporating at least one arm (50, 52; 56, 58; 60, 62) connecting on the one hand the free end (28) of the mobile part and on the other the fixed part of the apparatus, said arm or arms having an adequate flexibility in the second direction (y) not to impede the displacement of the mobile part in said second direction (y) and a sufficient rigidity in the first direction (z) to limit deformations of the mobile part in said first direction.

**2.** Apparatus according to claim 1, the compensating arm or arms being connected to the fixed part positioned laterally with respect to the mobile part or to the fixed part facing the free end of said mobile part.

**3.** Apparatus according to one of the preceding claims, the mobile part having several interconnected beams.

**4.** Compensating apparatus according to any one of the claims 1 to 3, the first (z) and the second (y) directions being perpendicular to one another.

**5.** Compensating apparatus according to any one of the claims 1 to 4, there being two arms (50, 52; 56, 58; 60, 62).

**6.** Compensating apparatus according to claim 5, the mobile part having a symmetry with respect to a median plane, the two arms (50, 52; 56, 58; 60, 62) being symmetrical to one another with respect to said same median plane.

**7.** Compensating apparatus according to any one of the claims 1 to 6, the arm or arms (56, 58; 60, 62) being in each case right-angled, with two segments substantially perpendicular to one another.

**8.** Compensating apparatus according to any one of the claims 1 to 6, the arm or arms (50, 52) having in each case a U-shaped body (51), with a branch (53, 55) added to the free end substantially perpendicular to each lateral branch of the U.

**9.** Compensating apparatus according to any one of the claims 1 to 6, the arm or arms being straight.

**10.** Optomechanical switch having a compensating device as comprised in the apparatus according to any one of the claims 1 to 9, the mobile part having a beam (26) equipped with a central microguide (32).

**11.** Optomechanical switch according to claim 10, also comprising a substrate (10) supporting a guide structure (12, 16, 32) in which is defined the beam (26) having the microguide (32), a recess (24) made in the substrate, an entrance microguide (18) and two exit microguides (20, 22) defined in the guide structure, the entrance and exit microguides being located on either side of the recess (24) and means (36, 38, 44, 46, 40, 48) for controlling the displacement of the beam (26).

**12.** Optomechanical accelerometer incorporating a compensating device as comprised in the apparatus according to any one of the claims 1 to 9, the mobile part being constituted by a mass (68) placed at the end of one or more beams (66).

**13.** Accelerometer according to claim 12, also comprising a substrate (80) supporting a layer (76) in which is defined the mass (68) and the beam or beams (66).

**14.** Accelerometer according to claim 13, comprising an optical guide (72) passing longitudinally through a beam (66),/ at least one optical guide (70) incorporated into the layer (76) and positioned facing the mobile end of the beam.

**15.** Process for determining the dimensioning of the arm or arms of a compensating device as comprised in the apparatus according to any one of the claims 1 to 9, characterized in that:

- determination takes place at a so-called critical point of a parasitic deformation D of the mobile part in the first direction (z), in the case where the mobile part has no compensation device,
- the equivalent mechanical loading P for bringing about the parasitic deformation D at the critical point is calculated,
- the loading P is applied to the assembly constituted by the mobile part and the compensation device and from it is deduced the mechanical deformation $D_t$ of the mobile part with the compensating device,
- the dimensioning of the compensating device is deduced therefrom so that the parasitic deformation $D_t$ is below a desired limit value $D_c$.

**16.** Process according to claim 15, wherein modelling takes place of the mobile part in the form of a beam having the same length, same moment of inertia and same modulus of elasticity as said mobile part and wherein modelling takes place of the compensating arms in the form of a beam, whereof certain parameters have to be determined to obtain the dimensioning of the arm or arms.

**17.** Process according to claim 15, wherein determination takes place of the length ($L_p$) and/or the modulus of elasticity ($E_2$) and/or the moment of inertia ($I_2$) of the beam, which models the compensating arms.

**Patentansprüche**

1. Mikromechanische Vorrichtung mit einer optischen Leitstruktur (32, 72), die einen beweglichen Teil umfasst, der zwei Enden (28, 30) hat, wovon das eine festes Ende (28) genannt wird, eine Ebene definiert und an einem festen Teil (12, 16, 76) der Vorrichtung angebracht ist, und das andere freies Ende (30) genannt wird, wobei diese Vorrichtung auch ein System zur Kompensierung der Verformungen in einer ersten Richtung (z) umfasst, senkrecht zu der Ebene des beweglichen Teils (26, 68), und dieser letztere sich in einer zweiten, in der genannten Ebene enthaltenen, von der ersten Richtung (z) verschiedenen Richtung (y) bewegen kann, und das genannte Kompensierungssystem wenigstens einen Arm (50, 52; 56, 58; 60, 62) umfasst, der einerseits das freie Ende (28) des beweglichen Teils und andererseits den festen Teil der Vorrichtung verbindet, wobei dieser Arm oder diese Arme in der zweiten Richtung (y) eine ausreichende Nachgiebigkeit aufweisen, um die Bewegung des beweglichen Teils in dieser zweiten Richtung (y) nicht zu behindern, und in der ersten Richtung (z) eine ausreichende Steifigkeit, um die Verformungen des beweglichen Teils in dieser ersten Richtung zu begrenzen.

2. Vorrichtung nach Anspruch 1, wobei der oder die Kompensierungsarme mit dem in Bezug auf den beweglichen Teil seitlich befindlichen festen Teil verbunden sind oder mit dem festen Teil gegenüber dem freien Ende des genannten beweglichen Teils.

3. Vorrichtung nach einem der vorhergehenden Ansprüche, wobei der bewegliche Teil mehrere miteinander verbundene Träger umfasst.

4. Kompensierungsvorrichtung nach einem der Ansprüche 1 bis 3, wobei die erste Richtung (z) und die zweite Richtung (y) parallel zueinander sind.

5. Kompensierungsvorrichtung nach einem der Ansprüche 1 bis 4, wobei die Arme (50, 52; 56, 58; 60, 62) zwei an der Zahl sind.

6. Kompensierungsvorrichtung nach Anspruch 5, wobei der bewegliche Teil eine Symmetrie in Bezug auf die Mittelebene aufweist und die beiden Arme (50, 52; 56, 58; 60, 62) in Bezug auf dieselbe Mittelebene zueinander symmetrisch sind.

7. Kompensierungsvorrichtung nach einem der Ansprüche 1 bis 6, wobei der oder die Arme (56, 58; 60, 62) jeweils eine Winkelform haben, mit zwei im wesentlichen zueinander senkrechten Segmenten.

8. Kompensierungsvorrichtung nach einem der Ansprüche 1 bis 6, wobei der oder die Arme (50, 52) jeweils ein "U"-förmiges Hauptstück (51) umfassen, mit einem Zweig (53, 55), der im wesentlichen senkrecht zu jedem Seitenzweig des "U" an das freie Ende angefügt ist.

9. Kompensierungsvorrichtung nach einem der Ansprüche 1 bis 6, wobei der oder die Arme geradlinig sind.

10. Optomechanischer Schalter mit einer Kompensierungsvorrichtung nach einem der Ansprüche 1 bis 9, wobei der bewegliche Teil einen Balken (26) umfasst, der mit einem zentralen Mikroleiter (32) versehen ist.

11. Optomechanischer Schalter nach Anspruch 10, der außerdem ein Substrat (10) umfasst, das eine Leiterstruktur (12, 16, 32) trägt, in der der den Mikroleiter (32) enthaltende Balken (26), eine in dem Substrat vorgesehene Aussparung (24), ein Eintrittsmikroleiter (18) und zwei in der Leiterstruktur definierte Austrittsmikroleiter (20, 22) definiert sind, wobei der Eintritts- und der Austrittsmikroleiter beiderseits der Aussparung (24) angeordnet sind, sowie Einrichtungen (36, 38, 44, 46, 40, 48), um die Bewegung des Balkens (26) zu steuern.

12. Optomechanischer Beschleunigungsmesser mit einem Kompensierungs-system wie enthalten in der Kompensierungsvorrichtung nach einem der Ansprüche 1 bis 9, wobei der bewegliche Teil durch eine Masse (68) gebildet wird, die sich am Ende eines oder mehrerer Balken (66) befindet.

13. Beschleunigungsmesser nach Anspruch 12, der außerdem ein Substrat (80) umfasst, in dem die Masse (68) und der oder die Balken (66) definiert sind.

14. Beschleunigungsmesser nach Anspruch 13, der einen optischen Leiter (72), der in Längsrichtung in einem Balken (66) verläuft, und wenigstens einen optischen Leiter (70) umfasst, der in die Schicht (76) integriert ist und dem beweglichen Ende des Balkens gegenübersteht.

15. Verfahren zur Festlegung der Dimensionierung des Arms oder der Arme eines Kompensierungssystems wie enthalten in der Vorrichtung nach einem der Ansprüche 1 bis 9, dadurch gekennzeichnet, dass:

- man in dem Fall, wo der bewegliche Teil kein Kompensierungssystem umfasst, in einem sogenannten kritischen Punkt eine Störverformung D des beweglichen Teils in der ersten Richtung (z) bestimmt,
- man berechnet, welche äquivalente mechanische Belastung P die Störverformung D im kritischen Punkt verursacht,
- man die Belastung P auf die durch den beweglichen Teil und das Kompensierungs-system gebildete Einheit anwendet und daraus die mechanische Verformung $D_t$ des beweglichen Teils mit dem Kompensierungssystem ableitet,
- man davon die Dimensionierung des Kompensierungssystems ableitet, damit die Störverformung $D_t$ kleiner ist als ein erwünschter Grenzwert $D_c$.

16. Verfahren nach Anspruch 15, in dem man zudem den beweglichen Teil in Form eines Balkens mit derselben Länge, demselben Trägheitsmoment und demselben Young-Modul wie bei dem genannten beweglichen Teil modelliert, und in dem man die Kompensierungsarme in Form eines Balkens modelliert, dessen Parameter zur Dimensionierung des Balkens oder der Balken festzulegen sind.

17. Verfahren nach Anspruch 15, in dem man die Länge ($L_p$) und/oder den Young-Modul ($E_2$) und/oder das Trägheitsmoment ($I_2$) des Balkens, der den Kompensierungsarm modelliert, bestimmt.

FIG.1

FIG. 2 a

FIG. 2 b

FIG. 3 a

FIG. 3 b

FIG. 4

FIG. 5 a

FIG. 5 b

FIG. 6